# EUROPEAN PATENT APPLICATION

(11) **EP 4 372 284 A1**
(43) Date of publication of application: **22.05.2024**
(21) Application number: 23740459.5
(22) Date of filing: 11.01.2023
(51) Int. Cl.: F24C 7/08, G06Q 50/10, H04N 23/57, G06V 20/68

(54) **ELECTRONIC DEVICE AND CONTROL METHOD THEREFOR**

(30) Priority: 13.01.2022 KR 20220005318
(71) Applicant: Samsung Electronics Co., Ltd., Suwon-si, Gyeonggi-do 16677 (KR)
(72) Inventor: KIM, Jaewoong, Suwon-si, Gyeonggi-do 16677 (KR); KIM, Sanga, Suwon-si, Gyeonggi-do 16677 (KR); AHN, Juneok, Suwon-si, Gyeonggi-do 16677 (KR); LEE, Yunkyeong, Suwon-si, Gyeonggi-do 16677 (KR); JANG, Useong, Suwon-si, Gyeonggi-do 16677 (KR)
(74) Representative: Gulde & Partner
(86) International application number: PCT/KR2023/000531
(87) International publication number: WO 2023/136615

(57) **Abstract**

An electronic apparatus is provided. An electronic apparatus includes a memory storing instructions, a plurality of cooking histories, and a plurality of cooking objects, and a processor configured to execute the instructions to, based on identification information regarding the plurality of cooking objects, identify a cooking object corresponding to the identification information from among the plurality of cooking objects; based on cooking setting information corresponding to a user input, identify a cooking history corresponding to the cooking setting information from among the plurality of cooking histories; obtain a cooking prediction result corresponding to the cooking history; and provide, to a user of the electronic apparatus, information regarding the cooking prediction result.

## Description

### [Technical Field]

This disclosure relates to an electronic apparatus and a controlling method thereof and more particularly, to an electronic apparatus using a cooking history and a controlling method thereof.

### [Background Art]

Recently, various types of electronic apparatuses have been developed and distributed. In particular, various types of electronic apparatuses that help cook food in home kitchens are being actively developed and distributed.

In an electronic apparatus such as an oven, when a user sets a cooking temperature and a cooking time, it is difficult to check the state of a cooking object in the middle of an operation of the oven, and it is difficult to change the cooking temperature and the cooking time in the middle once they are set.

Therefore, a user who is inexperienced in oven manipulation may frequently have the problem that the cooking object is overcooked or the cooking object is not properly cooked.

There has been a demand for a method for predicting and providing a cooking result to the user before operating the oven.

### [Disclosure]

### [Technical Problem]

The disclosure has been made to solve the above-described problem, and an object of the disclosure is to provide an electronic apparatus for cooking a cooking object in consideration of a cooking history, context information on the cooking object and user preference information and a controlling method thereof.

### [Technical Solution]

A display apparatus according to an embodiment includes a memory in which a cooking history and a recipe corresponding to each of a plurality of cooking objects are stored and a processor configured to, based on identification information regarding cooking objects being obtained, identify a cooking object corresponding to the obtained identification information from among the plurality of cooking objects, based on cooking setting information corresponding to a user input being obtained, identify a cooking history corresponding to the cooking setting information from among a plurality of cooking histories stored in the memory, and obtain a cooking prediction result corresponding to the identified cooking history and provide information regarding the obtained cooking prediction result.

The processor may be configured to provide guide information for adjusting the cooking setting information based on at least one of context information regarding the cooking object or user preference information, and the context information regarding the cooking object may include at least one of a weight of the cooking object, temperature information of an interior of a cooking chamber, or state information of the cooking object.

The guide information may be information including a recommended adjustment range of at least one of a cooking time or a cooking temperature included in the cooking setting information.

The processor may be configured to receive a user command for selecting a degree of cooking or roasting regarding the cooking object, and obtain the received user command as the user preference information.

The apparatus may further include a temperature sensor configured to sense a temperature of the cooking object, and the processor may be configured to identify at least one of temperature information of an interior of the cooking chamber or state information of the cooking object based on a temperature sensed through the temperature sensor.

The apparatus may further include a communication interface, and the processor may be configured to, based on information regarding whether a specific function has been executed in an external device being received through the communication interface, obtain context information regarding the cooking object based on the information, and the specific function may include at least one of a pre-cooking function, a freezing function or a defrosting function regarding the cooking object.

The processor may be configured to identify the cooking prediction result by inputting the cooking object and the cooking setting information to a neural network model, and the neural network model may be a model trained to output the cooking prediction result regarding the cooking object based on at least one of a cooking time or a cooking temperature included in the cooking setting information.

The apparatus may further include a camera, and the processor may be configured to obtain an image capturing an interior of a cooking chamber through the camera and obtain identification information regarding the cooking object based on the image.

The processor may be configured to, based on a cooking command being received, cook the cooking object based on the cooking setting information and obtain a cooking result regarding the cooking object after the cooking is completed, and add the obtained cooking result to the cooking history.

The apparatus may further include a camera, and the processor may be configured to obtain an image capturing an interior of a cooking chamber through the camera after the cooking is completed and obtain the cooking result regarding the cooking object by analyzing the obtained image.

The processor may be configured to, based on a cooking history corresponding to the cooking setting information from among the plurality of cooking histories not being identified, obtain recipe information corresponding to the cooking object and provide the obtained recipe information.

A controlling method of an electronic apparatus including a cooking history and recipe information corresponding to each of a plurality of cooking objects according to an embodiment includes, based on identification information regarding cooking objects being obtained, identifying a cooking object corresponding to the obtained identification information from among the plurality of cooking objects, based on cooking setting information corresponding to a user input being obtained, identifying a cooking history corresponding to the cooking setting information from among a plurality of cooking histories stored in the memory, and obtaining a cooking prediction result corresponding to the identified cooking history and providing information regarding the obtained cooking prediction result.

The method may further include providing guide information for adjusting the cooking setting information based on at least one of context information regarding the cooking object or user preference information, and the context information regarding the cooking object may include at least one of a weight of the cooking object, temperature information of an interior of a cooking chamber, or state information of the cooking object

The guide information may be information including a recommended adjustment range of at least one of a cooking time or a cooking temperature included in the cooking setting information.

The method may further include receiving a user command for selecting a degree of cooking or roasting regarding the cooking object and obtaining the received user command as the user preference information.

The method may further include identifying at least one of temperature information of an interior of the cooking chamber or state information of the cooking object based on a temperature sensed through the temperature sensor provided in the electronic apparatus.

The method may further include, based on information regarding whether a specific function has been executed in an external device being received, obtaining context information regarding the cooking object based on the information, and the specific function may include at least one of a pre-cooking function, a freezing function or a defrosting function regarding the cooking object.

The providing information regarding the cooking prediction result includes identifying the cooking prediction result by inputting the cooking object and the cooking setting information to a neural network model, and the neural network model may be a model trained to output the cooking prediction result regarding the cooking object based on at least one of a cooking time or a cooking temperature included in the cooking setting information.

The identifying a cooking object includes obtaining an image capturing an interior of a cooking chamber through the camera and obtaining identification information regarding the cooking object based on the image.

The method may further include, based on a cooking command being received, cooking the cooking object based on the cooking setting information and obtaining a cooking result regarding the cooking object after the cooking is completed, and adding the obtained cooking result to the cooking history.

### [Description of Drawings]

FIG. 1 is a perspective view provided to explain specific configuration of an electronic apparatus;
FIG. 2 is a block diagram illustrating configuration of an electronic apparatus according to an embodiment;
FIG. 3 is a block diagram provided to explain configuration of an electronic apparatus in detail according to an embodiment;
FIG. 4 is a sequence view provided to explain a cooking prediction result according to an embodiment;
FIG. 5 is a view provided to explain a cooking history according to an embodiment;
FIG. 6 is a sequence view provided to explain a neural network model according to an embodiment;
FIG. 7 is a sequence view provided to explain cooking result information according to an embodiment;
FIG. 8 is a sequence view provided to explain recipe information according to an embodiment;
FIG. 9 is a view provided to explain recipe information according to an embodiment;
FIG. 10 is a sequence view provided to explain context information and user preference information according to an embodiment;
FIG. 11 is a view provided to explain a method of obtaining context information and user preference information according to an embodiment;
FIG. 12 is a view provided to explain guide information according to an embodiment; and
FIG. 13 is a flowchart provided to explain a controlling method of an electronic apparatus according to an embodiment.

### [Detailed Description of Exemplary Embodiments]

Hereinafter, the present disclosure will be described in detail with reference to accompanying drawings below.

General terms that are currently widely used were selected as terms used in embodiments of the disclosure in consideration of functions in the disclosure, but may be changed depending on the intention of those skilled in the art or a judicial precedent, an emergence of a new technique, and the like. In addition, in a specific case, terms arbitrarily chosen by an applicant may exist. In this case, the meaning of such terms will be mentioned in detail in a corresponding description portion of the disclosure. Therefore, the terms used in the disclosure should be defined on the basis of the meaning of the terms and the contents throughout the disclosure rather than simple names of the terms.

In the disclosure, an expression "have", "may have", "include", "may include", or the like, indicates an existence of a corresponding feature (for example, a numerical value, a function, an operation, a component such as a part, or the like), and does not exclude an existence of an additional feature.

The expression "at least one of A and/or B" should be understood to represent either "A" or "B" or any one of "A and B."

Expressions such as "first," or "second," used in the disclosure may modify various components regardless of order and/or importance, and are used to distinguish one component from another component, and do not limit the corresponding components.

When it is mentioned that any component (e.g., a first component) is (operatively or communicatively) coupled with/to or is connected to another component (e.g., a second component), it is to be understood that any component is directly coupled to another component or may be coupled to another component through another component (e.g., a third component).

Singular expressions include plural expressions unless the context clearly indicates otherwise. It should be further understood that the term "include" or "constituted" used in the application specifies the presence of features, numerals, steps, operations, components, parts mentioned in the specification, or combinations thereof, but do not preclude the presence or addition of one or more other features, numerals, steps, operations, components, parts, or combinations thereof.

In the disclosure, a 'module' or a 'unit' may perform at least one function or operation, and be implemented by hardware or software or be implemented by a combination of hardware and software. In addition, a plurality of 'modules' or a plurality of 'units' may be integrated in at least one module and be implemented as at least one processor (not illustrated) except for a 'module' or an 'unit' that needs to be implemented by specific hardware.

In the disclosure, a term "user" may be a person or a device (e.g., an artificial intelligence electronic device) that uses an electronic apparatus.

Hereinafter, an embodiment of the present disclosure will be described in greater detail with reference to the accompanying drawings.

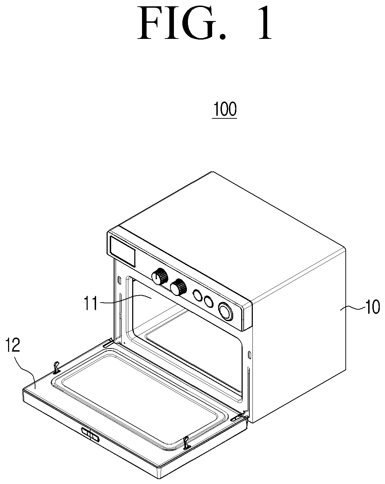

FIG. 1 is a perspective view provided to explain specific configuration of an electronic apparatus.

An electronic apparatus 100 illustrated in FIG. 1 is only an example, and the electronic apparatus may be implemented in various forms.

The electronic apparatus 100 includes a main body 10 forming an exterior. In addition, the electronic apparatus 100 includes a cooking chamber 11 for accommodating a cooking object (or cooked food, food, foodstuff, etc.) and a door 12 for opening and closing the cooking chamber 11.

Here, the cooking chamber 11 may mean a space for accommodating a cooking object (i.e., an accommodation space). The front of the cooking chamber 11 may be opened and closed by the door 12 connected to the main body 10.

In addition, a heater (not illustrated) for heating a cooking object may be provided in the cooking chamber 11. In this case, the heater may be an electric heater including an electric resistor. However, the heater is not limited to the electric heater, and it may be a gas heater that generates heat by burning gas.

Meanwhile, a control panel is disposed on the upper portion of the main body 10. The control panel may display various operation information of the electronic apparatus 100 and include a touch-type display that receives a user command and a user input for controlling the operation of the electronic apparatus 100. However, the control panel is not limited thereto, and it may include a plurality of buttons that receive a user command for controlling the operation of the electronic apparatus 100.

The electronic apparatus 100 according to an embodiment may cook a cooking object located in the cooking chamber 11 based on cooking setting information corresponding to a user input. Here, the cooking setting information may include at least one of a cooking time or a cooking temperature.

Meanwhile, the electronic apparatus 100 according to an embodiment may identify a cooking object located in the cooking chamber 11, and predict a cooking result when cooking the identified cooking object according to cooking setting information. For example, if the cooking object is cooked according to cooking setting information corresponding to a user input, the cooking result showing to which degree the cooking object is boiled or roasted may be predicted, and the predicted cooking result may be provided to a user. Hereinafter, a method of predicting a cooking result by the electronic apparatus 100 will be described according to various embodiments of the present disclosure.

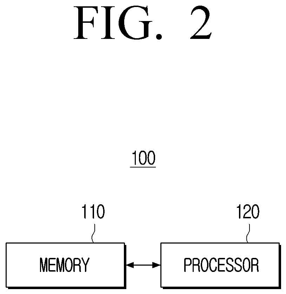

FIG. 2 is a block diagram illustrating configuration of an electronic apparatus according to an embodiment.

Referring to FIG. 2, the electronic apparatus 100 includes a memory 110 and a processor 120.

The memory 110 according to an embodiment may store data necessary for various embodiments of the present disclosure. The memory 110 may be implemented in a form of a memory embedded in the electronic apparatus 100 or in a form of a memory attachable to and detachable from the electronic apparatus 100, depending on a data storing purpose.

For example, data for driving the electronic apparatus 100 may be stored in the memory embedded in the electronic apparatus 100, and data for an extension function of the electronic apparatus 100 may be stored in the memory attachable to and detachable from the electronic apparatus 100. Meanwhile, the memory embedded in the electronic apparatus 100 may be implemented by at least one of a volatile memory (for example, a dynamic RAM (DRAM), a static RAM (SRAM), or a synchronous dynamic RAM (SDRAM)), a non-volatile memory (for example, a one time programmable ROM (OTPROM), a programmable ROM (PROM), an erasable and programmable ROM (EPROM), an electrically erasable programmable ROM (EEPROM), a mask ROM, a flash ROM, a flash memory (for example, a NAND flash or a NOR flash), a hard drive, or a solid state drive (SSD). In addition, the memory attachable to and detachable from the electronic apparatus 100 may be implemented by a memory card (for example, a compact flash (CF), a secure digital (SD), a micro secure digital (Micro-SD), a mini secure digital (Mini-SD), an extreme digital (xD), or a multi-media card (MMC)), an external memory (for example, a USB memory) connectable to a USB port, or the like.

The memory 110 according to an embodiment may store a computer program including at least one instruction or instructions for controlling the electronic apparatus 100.

In particular, the memory 110 stores a cooking history corresponding to each of a plurality of cooking objects. Here, the cooking object may be referred to as cooked food, food, foodstuff, etc., but it will be collectively referred to as a cooking object for convenience of explanation.

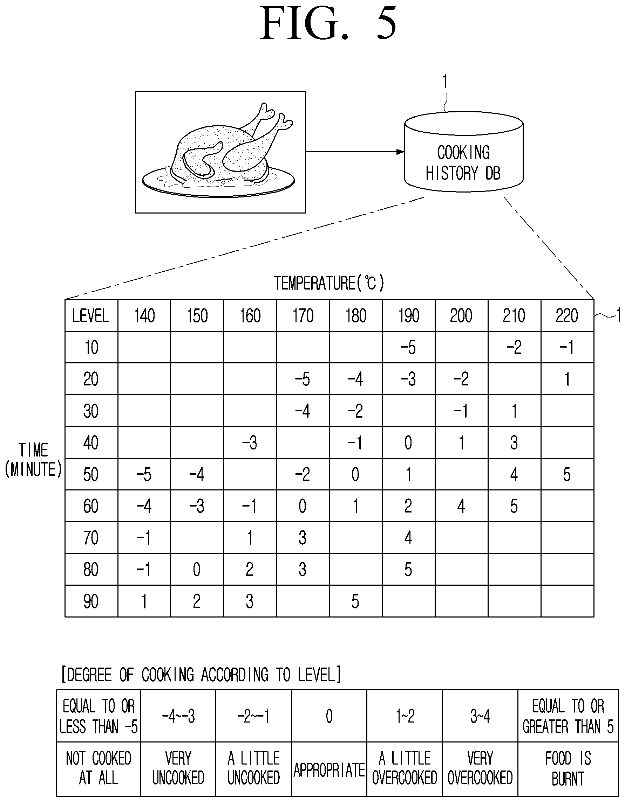

The cooking history according to an embodiment may include a cooking result regarding a cooking object after cooking the cooking object. For example, the cooking history may include a cooking result of the cooking object (e.g., a result of a degree of cooking or roasting) according to a cooking time or a cooking temperature. The cooking history stored in the memory 110 may include not only a cooking result obtained after cooking by the electronic apparatus 100 but also a cooking result obtained after cooking by another electronic apparatus 100', which is received through an external server, etc. The detailed description thereof will be provided later with reference to FIG. 5.

The memory 110 according to an embodiment may store recipe information corresponding to each of the plurality of cooking obj ects. Here, the recipe information may mean a standard recipe regarding a cooking object, not a cooking result of the electronic apparatus 100. For example, a recipe corresponding to a cooking object stored in the memory 110 may mean any one of recipes included in a search result of the cooking object.

The processor 120 according to an embodiment performs the overall control operations of the electronic apparatus 100. Specifically, the processor 120 performs the function of controlling the overall operations of the electronic apparatus 100.

The processor 120 may be implemented as a digital signal processor (DSP) for processing digital signals, a microprocessor, or a time controller (TCON), but is not limited thereto. The processor 120 may include at least one of a central processing unit (CPU), a micro controller unit (MCU), a micro processing unit (MPU), a controller, an application processor (AP), a graphics-processing unit (GPU), a communication processor (CP) or an ARM processor, or may be defined as the corresponding term. Further, the processor 120 may be implemented as a System on Chip (SoC) integrated with a processing algorithm, a large scale integration (LSI), or in the form of a field programmable gate array (FPGA). In addition, the processor 120 may perform various functions by executing computer executable instructions stored in the memory 130.

In particular, when identification information regarding cooking objects is obtained, the processor 120 may identify a cooking object corresponding to the identification information from among a plurality of cooking objects.

Subsequently, when cooking setting information corresponding to a user input is obtained, the processor 120 may identify a cooking history corresponding to the cooking setting information from among a plurality of cooking histories stored in the memory 110. Then, the processor 120 may obtain a cooking prediction result corresponding to the identified cooking history and provide information regarding the obtained cooking prediction result.

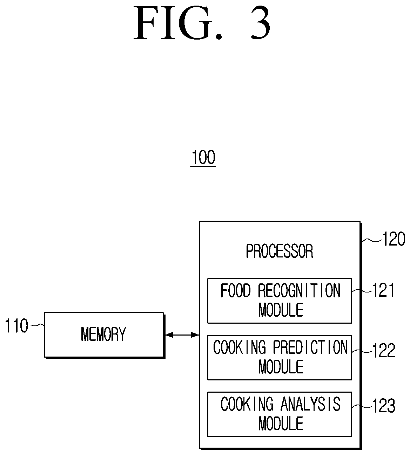

The detailed description thereof will be provided with reference to FIG. 3.

FIG. 3 is a block diagram provided to explain configuration of an electronic apparatus in detail according to an embodiment.

Referring to FIG. 3, the processor 120 includes a food recognition module 121, a cooking prediction module 122 and a cooking analysis module 123.

Firstly, the food recognition module 121 may identify a cooking object based on identification information regarding the cooking object. Here, the identification information regarding the cooking object may mean an image photographing the inside of the cooking chamber 11, which is received from a camera (not illustrated) provided in the electronic apparatus 100 or an image photographing the inside of the cooking chamber 11, which is received from an external device (e.g., a camera provided in the external device). However, this is only an example, and the present disclosure is not limited thereto. For example, the identification information regarding the cooking object may include information regarding the cooking object selected through a control panel, etc. (e.g., a menu or a food name).

Subsequently, the cooking prediction module 122 may obtain a cooking history corresponding to the cooking object identified through the food recognition module 121 from among cooking histories corresponding to a plurality of cooking objects, respectively, stored in the memory 110.

Then, the cooking prediction module 122 may identify a cooking history corresponding to cooking setting information from among the plurality of cooking histories corresponding to the cooking objects. Here, the cooking setting information may include at least one of a cooking time or a cooking temperature.

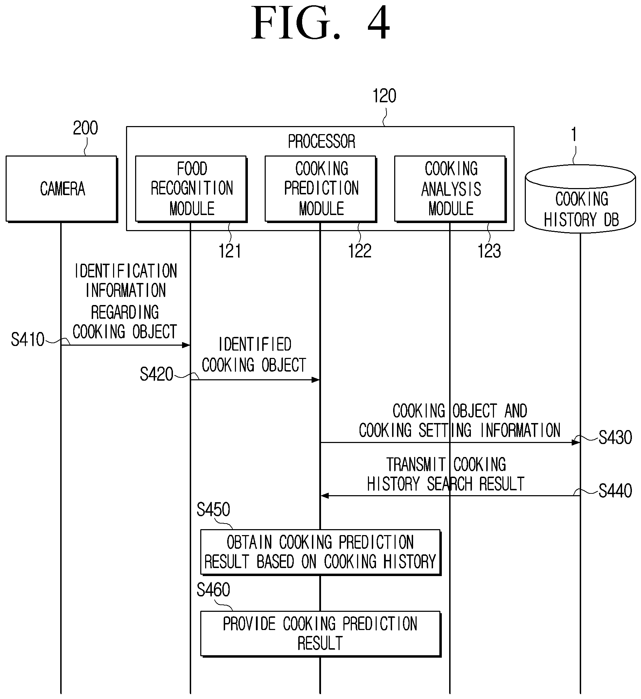

The cooking prediction module 122 may identify a cooking history corresponding to cooking setting information and then provide the identified cooking history. The detailed description thereof will be provided with reference to a sequence view of FIG. 4.

FIG. 4 is a sequence view provided to explain a cooking prediction result according to an embodiment.

Referring to FIG. 4, a camera 200 may obtain an image by photographing the inside of the cooking chamber 11. Subsequently, the camera 200 may transmit the image capturing the inside of the cooking chamber 11 to the food recognition module 121 (S410). Here, the image capturing the inside of the cooking chamber 11 may include a cooking object.

The food recognition module 121 according to an embodiment may obtain identification information regarding a cooking object by analyzing the image capturing the inside of the chamber 11 and identify a cooking object corresponding to the identification information from among a plurality of cooking objects (S420).

Subsequently, the cooking prediction module 122 may obtain a cooking history corresponding to a cooking object and cooking setting information from among a plurality of cooking histories 1 based on the cooking object and the cooking setting information received from the food recognition module 121 (S430, S440).

For example, if a cooking object received from the food recognition module 121 is `a potato', the cooking prediction module 122 may obtain cooking histories corresponding to 'the potato' from among a plurality of cooking histories. Subsequently, if cooking setting information is a cooking time of 30 minutes and a cooking temperature of 140°C, the cooking prediction module 122 may obtain a cooking history corresponding to the cooking setting information from among cooking histories corresponding to 'the potato.'

Subsequently, the cooking prediction module 122 may obtain a cooking result that is predicted when cooking the cooking object according to the cooking setting information based on a cooking result (e.g., the degree of boiling, roasting, etc.) included in the cooking history (S450).

Then, the cooking prediction module 122 may provide the cooking prediction result (S460). For example, the cooking prediction module 122 may provide the cooking prediction result (e.g., `potatoes may burn', `potatoes are likely to be boiled properly', etc.) through a display (not illustrated) or may provide the cooking prediction result through a speaker (not illustrated).

The specific description regarding cooking histories stored in the memory 110 according to an embodiment will be provided with reference to FIG. 5.

FIG. 5 is a view provided to explain a cooking history according to an embodiment.

Referring to FIG. 5, the memory 110 may include a cooking history corresponding to each of a plurality of cooking objects.

FIG. 5 illustrates that the cooking time (e.g., 10 minutes to 90 minutes) and the cooking temperature (140°C to 220°C) are limited. However, this is only an example, and the cooking time and the cooking temperature are not limited thereto. In addition, the cooking history may include a cooking result according to the weight of the cooking object (e.g., 500g to 4kg) as well as the cooking time and the cooking temperature.

When the cooking object identified through the food recognition module 121 is 'chicken', the cooking prediction module 122 according to an embodiment may obtain cooking histories corresponding to 'chicken.'

Subsequently, the cooking prediction module 122 may obtain a cooking result corresponding to cooking setting information (e.g., 60 minutes, 210°C) from among the cooking histories. For example, when the cooking result obtained by the cooking prediction module 122 is '5' (e.g., the cooking object (or food) is burnt), the cooking prediction module 122 may obtain and provide a predicted cooking result (e.g., 'chicken' is burnt) when the cooking object (e.g., 'chicken') is cooked according to the cooking setting information (e.g., 60 minutes, 210°C).

The specific numbers in FIG. 5 are only an example for convenience of explanation, and the present invention is not limited thereto. For example, the degree of cooking may be more subdivided than -5 to 5, the cooking time may be more subdivided than 10-minute interval, and the cooking temperature may be more subdivided than 10°C interval.

Meanwhile, in the above-described example, it is assumed that the cooking prediction module 122 obtains and provides a cooking history corresponding to a cooking object and cooking setting information identified in a cooking history corresponding to each of a plurality of cooking obj ects. However, this is only an example, and the present disclosure is not limited thereto. For example, the cooking prediction module 122 may obtain and provide a cooking prediction result corresponding to a cooking object and cooking setting information identified using a neural network model.

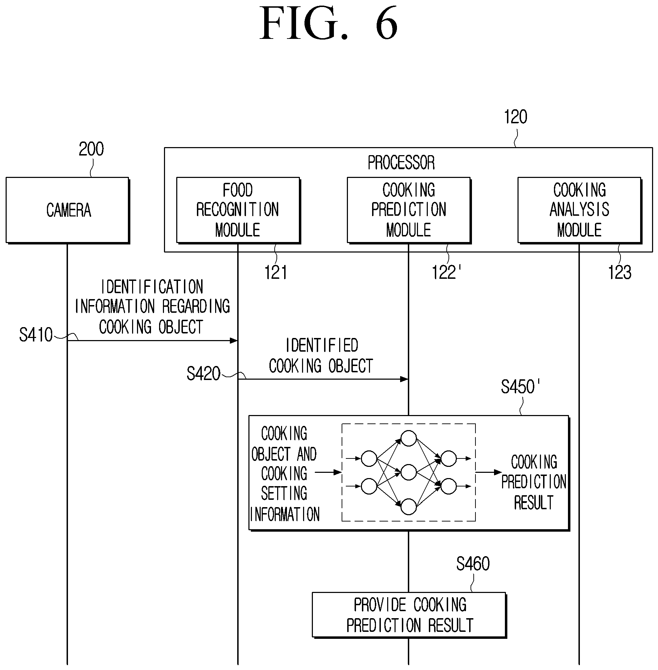

FIG. 6 is a sequence view provided to explain a neural network model according to an embodiment.

Among the steps illustrated in FIG. 6, overlapping description regarding the same steps as those described in FIG. 4 (e.g., S410, S420, S460) will be omitted.

The cooking prediction module 122 of the processor 120 according to an embodiment may be implemented as a cooking prediction neural network model 122'.

Here, the cooking prediction neural network model 122' may be a model trained to, when a cooking object identified through the cooking prediction module 121 and cooking setting information corresponding to a user input are input, output a cooking prediction result regarding the cooking object.

For example, the cooking prediction neural network model 122' may be a model trained to output a cooking prediction result regarding the cooking object based on at least one of a cooking time or a cooking temperature included in the cooking setting information.

The cooking prediction module 122 described in FIG. 4 and FIG. 5 identifies a cooking history corresponding to the cooking setting information from among cooking histories corresponding to the cooking object and then provides the identified cooking history, whereas the cooking prediction neural network model 122' described in FIG. 6 may be a model trained to obtain and output a cooking prediction result regarding the cooking object based on at least one of a cooking time or a cooking temperature included in the cooking setting information even if a cooking history corresponding to the cooking setting information from among cooking histories corresponding to the cooking object is not identified.

Meanwhile, the cooking prediction neural network model 122' may be a model trained to output a cooking prediction result regarding a cooking object when at least one of the cooking object, a cooking time or a cooking temperature is input with a cooking history corresponding to the cooking object and recipe information corresponding to the cooking object as learning data.

In the present disclosure, training a neural network model means creating a predefined operation rule or an artificial intelligence model that is set to perform a desired characteristic (or purpose) as a basic artificial intelligence model (e.g., an artificial intelligence model including an arbitrary random parameter) is trained by a learning algorithm using a plurality of learning data. Such learning may be conducted in a separate server and/or system but is not limited thereto. It may be conducted in the electronic apparatus 100. The examples of the learning algorithm may include supervised learning, unsupervised learning, semi-supervised learning, transfer learning or reinforcement learning, but is not limited thereto.

Here, each neural network model may be implemented as Convolutional Neural Network (CNN), Recurrent Neural Network (RNN), Restricted Boltzmann Machine (RBM), Deep Belief Network (DBN), Bidirectional Recurrent Deep Neural Network (BRDNN), Deep Q-Networks, etc., but is not limited thereto.

The processor 120 for executing a neural network model according to an embodiment may be implemented as a general-purpose processor such as a CPU, an AP, a Digital Signal Processor (DSP), etc., a graphics-only processor such as a GPU and a Vision Processing Unit (VPU), or a combination of an AI-only processor such as an NPU and software. The processor 120 may be controlled to process input data according to a predefined operation rule or a neural network model stored in the memory 110. Alternatively, when the processor 120 is a dedicated processor (or an AI-only processor), it may be designed with a hardware structure specialized for processing a specific neural network model. For example, hardware specialized for processing a specific neural network model may be designed as a hardware chip such as an ASIC, FPGA, etc. When the processor 120 is implemented as a dedicated processor, it may be configured to include a memory for implementing an embodiment of the present disclosure or may be configured to include a memory processing function for using an external memory.

When a cooking object and cooking setting information identified through the food recognition module 121 are input, the cooking prediction neural network model 122' according to an embodiment may output a cooking prediction result regarding the cooking object (S450').

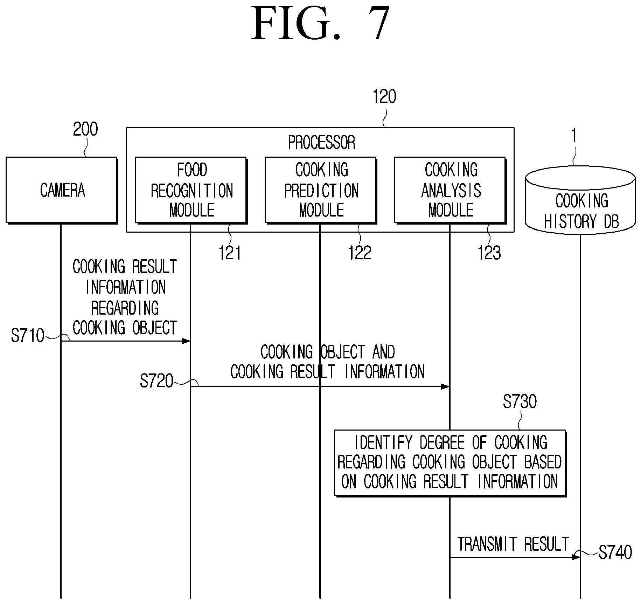

FIG. 7 is a sequence view provided to explain cooking result information according to an embodiment.

Referring to FIG. 7, when a cooking command (e.g., a cooking start command) is received, the processor 120 may control the electronic apparatus 100 to cook a cooking object based on cooking setting information.

Subsequently, the processor 120 may obtain a cooking result regarding the cooking object after cooking is completed. For example, when cooking is completed, the processor 120 may control the camera 200 to photograph the cooking object located in the cooking chamber 11 (S710).

The cooking analysis module 123 of the processor 120 may obtain an image capturing the inside of the cooking chamber 11 through the camera 200 and obtain a cooking result regarding the cooking object by analyzing the obtained image (S720). Here, the obtained image may mean cooking result information.

The cooking analysis module 123 according to an embodiment may identify a degree of boiling, roasting, etc. of the cooking object based on the cooking setting information. For example, the cooking analysis module 123 may obtain at least one of -5 to 5 as the degree of cooking or roasting as illustrated in FIG. 5 (S730).

Subsequently, the cooking analysis module 123 may add the obtained degree of cooking or roasting to a plurality of cooking histories 1 stored in the memory 110 (S740). For example, the cooking analysis module 123 may map a cooking object (e.g., `chicken'), cooking setting information (e.g., 10 minutes, 200°C), a degree of cooking or roasting (e.g., undercooked: `-2') and add the same to the plurality of cooking histories 1.

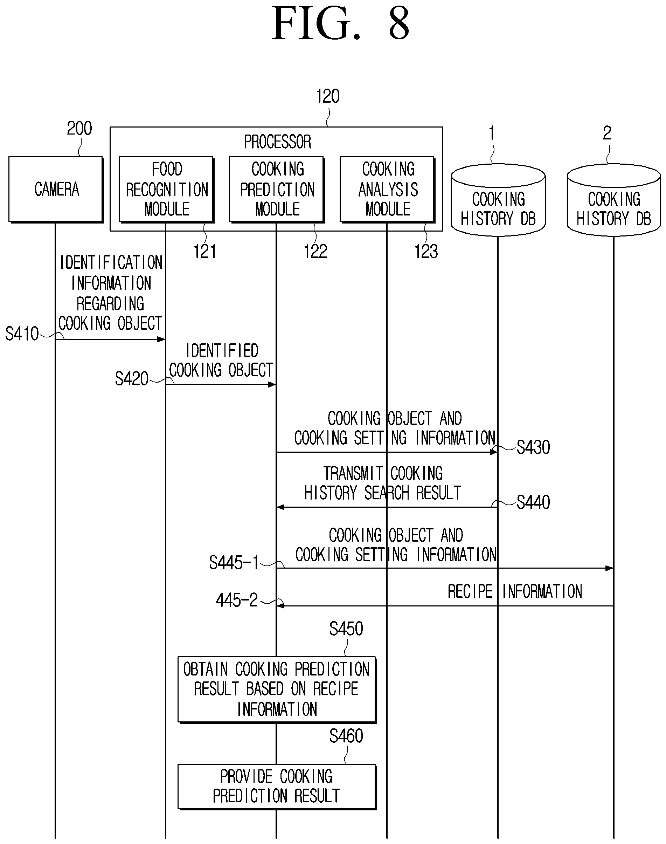

FIG. 8 is a sequence view provided to explain recipe information according to an embodiment.

Referring to FIG. 8, the processor 120 according to an embodiment may obtain and provide recipe information corresponding to a cooking object.

Among the steps illustrated in FIG. 8, the overlapping description regarding the steps same as those in FIG. 4 (e.g., SS410, S420, S450, S460) will be omitted.

The cooking prediction module 122 may obtain a cooking history corresponding to a cooking object and cooking setting information from among the plurality of cooking histories 1 based on the cooking object and the cooking setting information received from the food recognition module 121 (S430, S440).

Meanwhile, if a cooking history corresponding to the cooking setting information is not identified from among the plurality of cooking histories 1, the cooking prediction module 122 may obtain recipe information corresponding to the cooking object from among recipe information 2 corresponding to a plurality of cooking objects based on the cooking object and the cooking setting information (S445-1, S445-2).

For example, when the cooking object received from the food recognition module 121 is 'steak', the cooking prediction module 122 may obtain cooking histories corresponding to 'steak' from among a plurality of cooking objects. Subsequently, when the cooking setting information is 20 minutes of cooking time and 170°C of cooking temperature, the cooking prediction module 122 may obtain a cooking history corresponding to the cooking setting information from among the cooking histories corresponding to 'steak.'

Subsequently, when cooking histories corresponding to 'steak' are not identified or cooking histories corresponding to the cooking setting information (20 minutes of cooking time and 170°C of cooking temperature) are not identified from among the cooking histories corresponding to 'steak', the cooking prediction module 122 may obtain recipe information corresponding to 'steak.' For example, the cooking prediction module 122 may obtain and provide recipe information close to the cooking setting information (20 minutes of cooking time and 170°C of cooking temperature) from among recipe information corresponding to 'steak.'

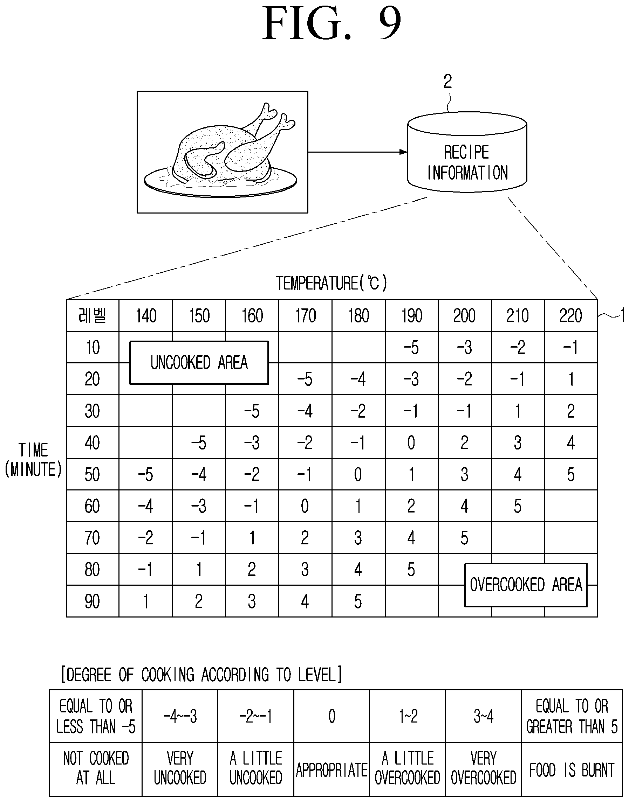

FIG. 9 is a view provided to explain recipe information according to an embodiment.

Referring to FIG. 9, the memory 110 may include recipe information corresponding to each of a plurality of cooking objects.

FIG. 9 limits a cooing time (e.g., 10 minutes to 90 minutes) and a cooking temperature (140°C to 220°C) for convenience of explanation, but they are only examples and the present disclosure is not limited thereto. In addition, the recipe information may include not only a cooking time and a cooking temperature but also a cooking result according to a weight (e.g., 500g to 4 kg) of a cooking object.

If the cooking object identified through the food recognition module 121 is 'chicken', the cooking prediction module 122 according to an embodiment may obtain recipe information corresponding to 'chicken.'

Subsequently, the cooking prediction module 122 may obtain recipe information corresponding to cooking setting information (e.g., 50 minutes, 180°C) from among the recipe information. For example, when the recipe information obtained by the cooking prediction module 122 is '0' (e.g., the cooking object (or food) is properly cooked), the cooking prediction module 122 may obtain and provide a cooking result (e.g., 'chicken' is properly cooked) that is predicted when the cooking object (e.g., 'chicken') is cooked according to the cooking setting information (e.g., 50 minutes, 180°C) based on the recipe information.

The specific numbers in FIG. 5 are only examples for convenience of explanation, and the present disclosure is not limited thereto. For example, the degree of cooking in a cooking result may be more subdivided than -5 to 5, the cooking time may be more subdivided than 10-minute interval, and the cooking temperature may be more subdivided than 10°C interval.

Meanwhile, the cooking prediction module 122 may obtain and provide a cooking time and a cooking temperature for cooking a cooking object of a certain weight (e.g., 1.6kg) according to a degree of cooking (or roasting) selected by a user input. Here, the degree of cooking (or roasting) selected according to a user input will be collectively referred to as user preference information.

For example, the cooking prediction module 122 may receive a weight of a cooking object through a weight measurement sensor provided in the electronic apparatus 100, and identify a cooking time and a cooking temperature for a cooking result of the cooking object to correspond to user preference information. For example, in response to a user input of 'chicken' of 1.6kg, the cooking prediction module 122 may obtain and provide a cooking time (e.g., 50 minutes) and a cooking temperature (e.g., 190°C) for cooking the cooking object according to a degree of cooking (e.g., slightly overcooked `1') based on recipe information.

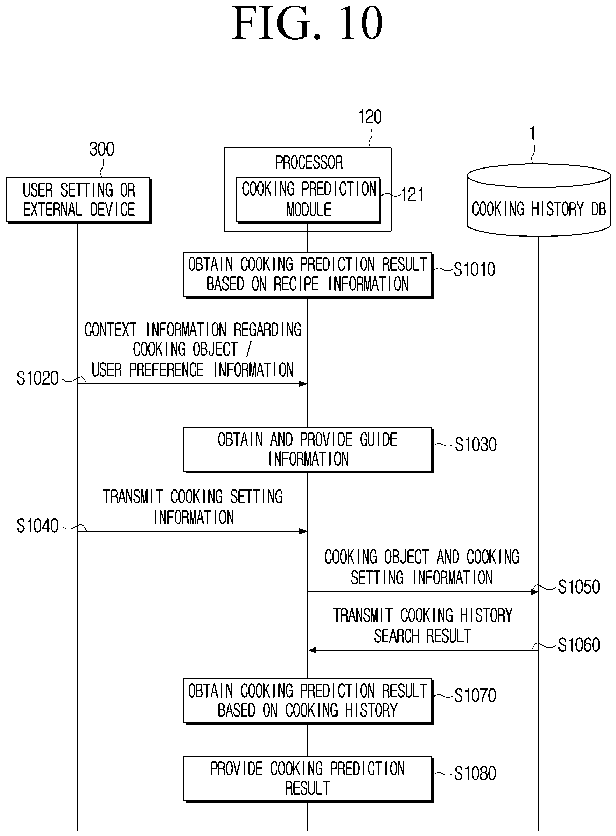

FIG. 10 is a sequence view provided to explain context information and user preference information according to an embodiment.

Referring to FIG. 10, the electronic apparatus 100 may obtain user preference information according to a user setting, or may obtain context information regarding a cooking object from an external device 300.

Firstly, the cooking prediction module 122 of the processor 120 may obtain a cooking prediction result (same as S1010 and S460). Subsequently, the cooking prediction module 122 may receive context information or user preference information regarding a cooking object through a user setting or from the external device 300 (51020).

Here, the context information regarding a cooking object may include at least one of a weight of the cooking object, temperature information of an interior of the cooking chamber 11 or state information of the cooking object.

Subsequently, the cooking prediction module 122 may provide guide information for adjusting cooking setting information based on at least one of the context information of the cooking object or the user preference information (S1030).

Here, the guide information may include a recommended adjustment range regarding a cooking time or a recommended adjustment range regarding a cooking temperature included in the cooking setting information.

For example, upon receiving that a cooking object is properly cooked (e.g, the degree of cooking `o) as user preference information after the cooking prediction module 122 provides a cooking prediction result that the cooking object is slightly overcooked (e.g., the degree of cooking '2') in the step of S1010 (S460 of FIG. 4), the cooking prediction module 122 may provide, as guide information, a recommended adjustment range regarding a cooking time (e.g., a cooking time shorter than a cooking time included in the cooking setting information) or a recommended adjustment range regarding a cooking temperature (e.g., a cooking temperature lower than a cooking temperature included in the cooking setting information) to cook the cooking object properly by adjusting the cooking time and cooking temperature included in the cooking setting information.

In another example, when the cooking object is in a frozen state or the temperature inside the cooking chamber 11 is less than a threshold temperature according to context information after the cooking prediction module 122 provides a cooking prediction result that the cooking object is slightly overcooked (e.g., the degree of cooking '2') in the step of S1010 (S460 of FIG. 4), the cooking prediction module 122 may provide, as guide information, a recommended adjustment range regarding a cooking time (e.g., a cooking time longer than a cooking time included in the cooking setting information) or a recommended adjustment range regarding a cooking temperature (e.g., a cooking temperature higher than a cooking temperature included in the cooking setting information) to for cooking the cooking object to match the cooking prediction result (e.g., slightly overcooked) provided in S1010 by adjusting the cooking time and the cooking temperature included in the cooking setting information.

In another example, when the cooking object is in a high temperature state (e.g., in a state after being primed or in a pre-cooked state) or the temperature inside the cooking chamber 11 is equal to or greater than a threshold temperature after the cooking prediction module 122 provides a cooking prediction result that the cooking object is moderately cooked (e.g., the degree of cooking '0') in the step of S1010 (S460 of FIG. 4), the cooking prediction module 122 may provide, as guide information, a recommended adjustment range regarding a cooking time (e.g., a cooking time shorter than a cooking time included in the cooking setting information) or a recommended adjustment range regarding a cooking temperature (e.g., a cooking temperature lower than a cooking temperature included in the cooking setting information) for cooking the cooking object to match the cooking prediction result (e.g, moderately cooked) provided in S1010 by adjusting the cooking time and the cooking temperature included in the cooking setting information.

Meanwhile, the electronic apparatus 100 may further include a temperature sensor (not illustrated), and the processor 120 may identify at least one of temperature information of an interior of the cooking chamber 11 or state information of a cooking object based on the temperature sensed through the temperature sensor.

When receiving cooking setting information adjusted by a user after providing guide information (S1040), the cooking prediction information 122 may obtain and provide a cooking prediction result through S1050 to S1080 as illustrated in FIG. 10. Here, as S1050 to S1080 are the same as S430 to S460 described in FIG. 4, overlapping description will be omitted.

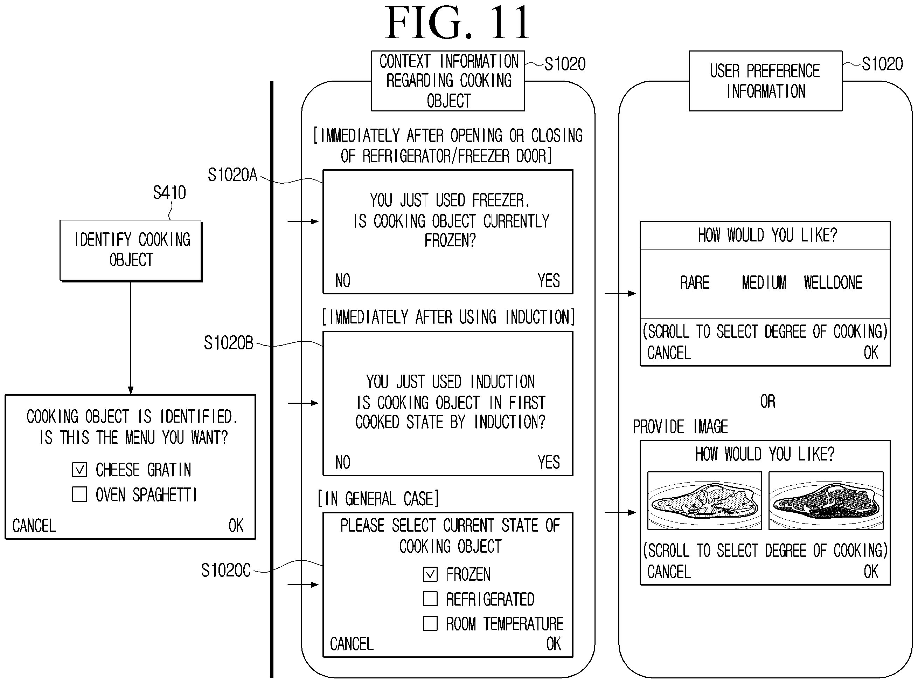

FIG. 11 is a view provided to explain a method of obtaining context information and user preference information according to an embodiment.

FIG. 11 illustrates an example of a control panel provided in the electronic apparatus 100.

Referring to FIG. 11, the processor 120 may identify a cooking object based on an image capturing inside of the cooking chamber 11 or may identify a cooking object (e.g., a food menu, etc.) according to a user command received through the control panel (S410).

The electronic apparatus 100 according to an embodiment may further include a communication interface (not illustrated).

The communication interface according to an embodiment performs communication with an external device to receive various types of data and information. For example, the communication interface may receive various types of data and information from home appliances (e.g., display apparatus, air conditioner, air purifier, etc.), external storage media (e.g., USB memory), external server (e.g., web hard drive) and the like through a communication method such as AP-based Wi-Fi (Wireless LAN Network), Bluetooth, Zigbee, wired/wireless Local Area (LAN), Wide Area Network (WAN), Ethernet, IEEE 1394, High-Definition Multimedia Interface (HDMI), Universal Serial Bus (USB), Mobile High-Definition Link (MHL), Audio Engineering Society/ European Broadcasting Union (AES/EBU), Optical, Coaxial, etc.

In particular, the communication interface according to an embodiment may perform communication with at least one external device (e.g., refrigerator, induction microwave oven, etc.) and may receive information regarding a function performed in the external device, context information of a cooking object, etc.

### <Description regarding S1020 of FIG. 10>

Referring to FIG. 11, when a cooking object is identified within a threshold time after information indicating that the door of an external device, for example, a refrigerator or a freezer, has been opened or closed is received through a communication interface, the processor 120 may identify that the cooking object is refrigerated or frozen.

In another example, when a cooking object is identified inside the cooking chamber 11 within a threshold time after information indicating that the door of an external device, for example, a refrigerator or a freezer, has been opened or closed is received through a communication interface, the processor 120 may provide a UI for confirming the state information of the cooking object, for example, whether it is refrigerated or frozen.

In another example, when a cooking object is identified inside the cooking chamber 11 within a threshold time after information indicating that an external device, for example, an induction or a microwave oven, has been operated through a communication interface, the processor 120 may provide a UI for confirming the state information of the cooking object, for example, whether it is pre-cooked.

In another example, when a cooking object is identified inside the cooking chamber 11 within a threshold time after information indicating that an external device, for example, a microwave oven, has executed a defrosting function through a communication interface, the processor 120 may provide a UI for confirming the state information of the cooking object, for example, whether it is defrosted.

However, the above embodiments are only examples, and the processor 120 may provide a UI for confirming the state information of the cooking object, for example, whether it is frozen, refrigerated, defrosted (or in a room-temperature state) even if information regarding whether a specific function has been executed in an external device is not received through a communication interface.

In addition, referring to FIG. 11, the processor 120 may provide a UI for receiving user preference information. Here, the user preference information may mean the degree of cooking or roasting of a cooking object.

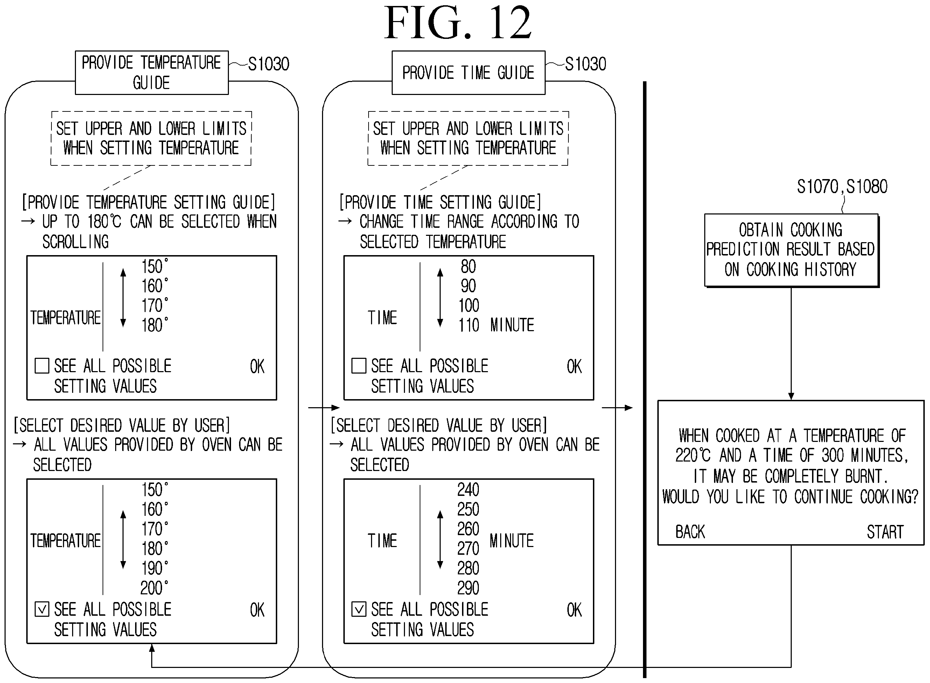

FIG. 12 is a view provided to explain guide information according to an embodiment.

### <Description regarding S1030 of FIG. 10>

Referring to FIG. 12, the processor 120 may provide guide information for adjusting cooking setting information based on at least one of context information or user preference information regarding a cooking object obtained in S1020 (S1030)/

For example, in order to cook a cooking object to a degree of cooking corresponding to user preference information, upper and lower limit ranges of a cooking temperature setting may be set, and upper and lower limit ranges of a cooking time setting may be set.

However, when a user command to view all possible cooking temperature setting values or cooking time setting values is received, all possible cooking temperatures and cooking times can be provided without providing guide information.

### <Description regarding S1070 and S1080 of FIG. 10>

Referring to FIG. 12, upon receiving cooking setting information or cooking setting information adjusted after guide information is provided, the processor 120 may provide a cooking result predicted when a cooking object is cooked according to the cooking setting information.

For example, a UI including `when cooked at a temperature of 220°C and a time of 300 minutes (degree of cooking '5'), it may be completely burnt. Would you like to continue cooking?', and selectable start and back buttons may be displayed.

As the user is provided with a cooking prediction result regarding a cooking object, there is an effect that the electronic apparatus 100 can be controlled to cook the cooking object to a desired degree of roasting without a failure process.

Referring back to FIG. 3, a camera is configured to generate a captured image by capturing an object and here, the captured image is a concept including both a moving image and a still image. The camera may obtain an image regarding at least one external device and may be implemented as a camera, a lens, an infrared sensor, etc.

The camera may include a lens and an image sensor. The type of lens include a general-purpose lens, a wide-angle lens, a zoom lens, etc., and it may be determined according to the type, characteristics, use environment, etc. of the electronic apparatus 100. As for the image sensor, a Complementary Metal Oxide Semiconductor (CMOS), a Charge Coupled Device (CCD), etc.

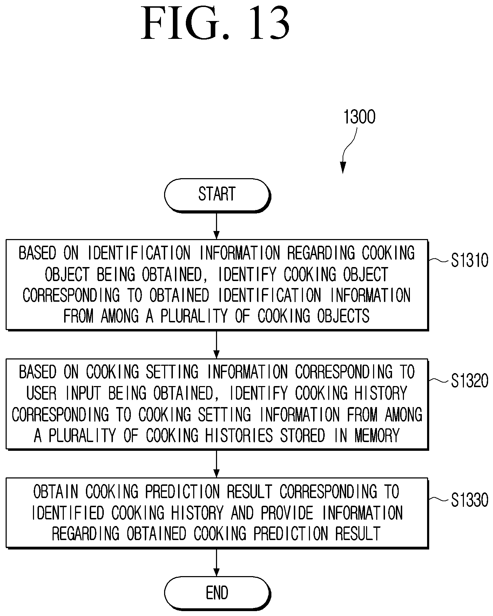

FIG. 13 is a flowchart provided to explain a controlling method of an electronic apparatus according to an embodiment.

A controlling method of an electronic apparatus including a cooking history and recipe information corresponding to each of a plurality of cooking objects according to an embodiment includes, firstly, when identification information regarding a cooking object is obtained, a cooking object corresponding to the obtained identification information is identified from among a plurality of cooking objects (S13 10).

Subsequently, when cooking setting information corresponding to a user input is obtained, a cooking history corresponding to the cooking setting information is identified from among a plurality of cooking histories stored in a memory (S1320).

Subsequently, a cooking prediction result corresponding to the identified cooking history is obtained and information regarding the obtained cooking prediction result is provided (S1030).

A controlling method according to an embodiment may further include providing guide information for adjusting cooking setting information based on at least one of context information or user preference information regarding a cooking object, and the content information regarding a cooking object may include at least one of a weight of the cooking object, temperature information of an interior of a cooking chamber, or state information of the cooking object.

Here, the guide information may be information including a recommended adjustment range of at least one of a cooking time or a cooking temperature included in the cooking setting information.

A controlling method according to an embodiment may further include receiving a user command for selecting a degree of cooking or roasting regarding a cooking object and obtaining the received user command as user preference information.

A controlling method according to an embodiment may further include identifying at least one of temperature information of an interior of a cooking chamber or state information of a cooking object based on a temperature sensed by a temperature sensor provided in an electronic apparatus.

A controlling method according to an embodiment may further include, when information regarding whether a specific function is executed in an external device is received, obtaining context information regarding a cooking object, and the specific function may include at least one of a pre-cooking function, a freezing function or a defrosting information regarding the cooking object.

The step of S1330 in which information regarding a cooking prediction result according to an embodiment is provided includes identifying a cooking prediction result by inputting a cooking object and cooking setting information to a neural network model, and the neural network model may be a model trained to output a cooking prediction result regarding the cooking object based on at least one of a cooking time or a cooking temperature included in the cooking setting information.

The step of S1310 in which a cooking object according to an embodiment is identified may include obtaining an image capturing an interior of a cooking chamber and obtaining identification information regarding a cooking object based on the image.

A controlling method according to an embodiment may include, when a cooking command is received, cooking a cooking object based on cooking setting information, obtaining a cooking result regarding the cooking object after cooking is completed and adding the obtained cooking result to a cooking history.

However, the various embodiments of the present disclosure may be applied not only to electronic apparatuses but also to various types of electronic apparatuses.

Meanwhile, the above-described various embodiments may be implemented in a recording medium that is readable by a computer or a similar device using software, hardware or a combination thereof. In some cases, the embodiments described in the present disclosure may be implemented by a processor itself. According to software implementation, the embodiments such as procedures and functions described in the present disclosure may be implemented by separate software modules. Each of the software modules may perform one or more functions and operations described in the present disclosure.

Meanwhile, the computer instructions for performing the processing operation of the electronic apparatus according to the above-described various embodiments of the present disclosure may be stored in a non-transitory computer-readable medium. The computer instructions stored in such a non-transitory computer-readable medium may cause a specific device to perform the processing operation of the electronic apparatus 100 according to the above-described various embodiments when they are executed by the processor of the specific device.

The non-transitory computer readable medium is not a medium that stores data for a while, such as a register, a cache, a memory, or the like, but means a medium that semi-permanently stores data and is readable by an apparatus. Specifically, the non-transitory readable medium may include a compact disc (CD), a digital versatile disc (DVD), a hard disc, a Blu-ray disc, a universal serial bus (USB), a memory card, a read only memory (ROM), or the like.

Although the embodiments of the disclosure have been illustrated and described hereinabove, the disclosure is not limited to the specific embodiments described above, but may be variously modified by those skilled in the art to which the disclosure pertains without departing from the gist of the disclosure as disclosed in the accompanying claims. These modifications should also be understood to fall within the scope and spirit of the disclosure.

## Claims

1. An electronic apparatus comprising:
a memory storing instructions, a plurality of cooking histories, and a plurality of cooking objects; and
a processor configured to execute the instructions to:
based on identification information regarding the plurality of cooking objects, identify a cooking object corresponding to the identification information from among the plurality of cooking objects;
based on cooking setting information corresponding to a user input, identify a cooking history corresponding to the cooking setting information from among the plurality of cooking histories stored in the memory;
obtain a cooking prediction result corresponding to the cooking history; and
provide, to a user of the electronic apparatus, information regarding the cooking prediction result.

2. The electronic apparatus of claim 1, wherein the processor is further configured to execute the instructions to:
provide, to the user, guide information for adjusting the cooking setting information based on at least one of context information regarding the cooking object and user preference information, and
wherein the context information regarding the cooking object comprises at least one of a weight of the cooking object, temperature information of an interior of a cooking chamber, and state information of the cooking object.

3. The electronic apparatus of claim 2, wherein the guide information comprises a recommended adjustment range of at least one of a cooking time and a cooking temperature comprised by the cooking setting information.

4. The electronic apparatus of claim 2, wherein the processor is further configured to execute the instructions to:
receive a user command indicating a selection of a degree of cooking or roasting regarding the cooking object; and
obtain the user command as the user preference information.

5. The electronic apparatus of claim 2, further comprising:
a temperature sensor configured to sense a temperature of the cooking object,
wherein the processor is further configured to execute the instructions to identify, based on the temperature of the cooking object, at least one of temperature information of an interior of the cooking chamber and the state information of the cooking object.

6. The electronic apparatus of claim 2, further comprising:
a communication interface,
wherein the processor is further configured to execute the instructions to:
receive, via the communication interface, information regarding whether a specific function has been executed in an external device; and
obtain, based on the information regarding whether the specific function has been executed, the context information regarding the cooking object, and
wherein the specific function comprises at least one of a pre-cooking function, a freezing function, and a defrosting function regarding the cooking object.

7. The electronic apparatus of claim 1, wherein the processor is further configured to execute the instructions to:
identify, using a neural network model, the cooking prediction result by inputting the cooking object and the cooking setting information to the neural network model, and
wherein the neural network model is trained to output the cooking prediction result regarding the cooking object based on at least one of a cooking time and a cooking temperature comprised by the cooking setting information.

8. The electronic apparatus of claim 1, further comprising:
a camera,
wherein the processor is further configured to execute the instructions to:
obtain an image capturing an interior of a cooking chamber through the camera; and
obtain the identification information regarding the cooking object based on the image.

9. The electronic apparatus of claim 1, wherein the processor is further configured to execute the instructions to:
based on a cooking command being received, cook the cooking object based on the cooking setting information;
obtain a cooking result regarding the cooking object after the cooking of the cooking object is completed; and
add the cooking result to the plurality of cooking histories.

10. The electronic apparatus of claim 9, further comprising:
a camera,
wherein the processor is further configured to execute the instructions to:
obtain an image capturing an interior of a cooking chamber through the camera after the cooking of the cooking object is completed, and
obtain the cooking result regarding the cooking object by analyzing the image.

11. The electronic apparatus of claim 1, wherein
the memory further stores recipe information corresponding to each of the plurality of cooking objects, and
the processor is further configured to execute the instructions to:
based on the cooking history corresponding to the cooking setting information from among the plurality of cooking histories not being identified, obtain the recipe information corresponding to the cooking object; and
provide, to the user, the recipe information.

12. A controlling method of an electronic apparatus, the controlling method comprising:
based on identification information regarding a plurality of cooking objects, identifying a cooking object corresponding to the identification information from among the plurality of cooking objects;
based on cooking setting information corresponding to a user input, identifying a cooking history corresponding to the cooking setting information from among a plurality of cooking histories;
obtaining a cooking prediction result corresponding to the cooking history; and
providing, to a user of the electronic apparatus, information regarding the cooking prediction result.

13. The controlling method of claim 12, further comprising:
providing, to the user, guide information for adjusting the cooking setting information based on at least one of context information regarding the cooking object and user preference information, and
wherein the context information regarding the cooking object comprises at least one of a weight of the cooking object, temperature information of an interior of a cooking chamber, and state information of the cooking object.

14. The controlling method of claim 13, wherein the guide information comprises a recommended adjustment range of at least one of a cooking time and a cooking temperature comprises by the cooking setting information.

15. The controlling method of claim 13, further comprising:
receiving a user command indicating a selection of a degree of cooking or roasting regarding the cooking object; and
obtaining the user command as the user preference information.
